# EUROPEAN PATENT APPLICATION

(11) **EP 2 843 086 A2**
(43) Date of publication of application: **04.03.2015**
(21) Application number: 14182063.9
(22) Date of filing: 25.08.2014
(51) Int. Cl.: C25D 5/12, C23C 10/00, C25D 5/50, C25D 7/00, H01R 13/00, C25D 3/12, C25D 3/38, C25D 3/30

(54) **Tin-plated copper-alloy material for terminal having excellent insertion/extraction performance**

(30) Priority: 26.08.2013 JP 2013174844
(71) Applicant: Mitsubishi Materials Corporation, Chiyoda-ku Tokyo 100-8117 (JP)
(72) Inventor: Kato, Naoki, Naka-shi, Ibaraki 311-0102 (JP); Inoue, Yuki, Naka-shi, Ibaraki 311-0102 (JP); Tarutani, Yoshie, Naka-shi, Ibaraki 311-0102 (JP)
(74) Representative: Gille Hrabal

(57) **Abstract**

A tin-plated copper-alloy terminal material in which: a Sn-based surface layer formed on a surface of a substrate made of Cu alloy, and a Cu-Sn alloy layer/a Ni-Sn alloy layer/a Ni or Ni alloy layer are formed in sequence from the Sn-based surface layer between the Sn-based surface layer and the substrate; the Cu-Sn alloy layer is a compound-alloy layer containing Ca₆Sn₅ as a main component and a part of Cu in the Cu₆Sn₅ is displaced by Ni; the Ni-Sn alloy layer is a compound-alloy layer containing Ni₃Sn₄ as a main component and a part ofNi in the Ni₃Sn₄ is displaced by Cu; an arithmetic average roughness Ra of the Cu-Sn alloy layer is 0.3µm or more in at least one direction and arithmetic average roughness Ra in all directions is 1.0µm or less; an oil-sump depth Rvk of the Cu-Sn alloy layer is 0.5µm or more; an average thickness of the Sn-based surface layer is 0.4µm or more and 1.0µm or less; and a dynamic friction coefficient is 0.3 or less.

## Description

### BACKGROUND OF THE INVENTION

### Field of the Invention

The present invention relates to tin-plated copper-alloy material for terminal that is useful for a terminal for a connector used for connecting electrical wiring of automobiles or personal products, in particular, which is useful for a terminal for a multi-pin connector.

Priority is claimed on Japanese Patent Application No. 2013-174844, filed on August 26,2013, the content of which is incorporated herein by reference.

### Description of Related Art

Tin-plated copper-alloy material for terminal is formed by reflowing after Cu-plating and Sn-plating on a substrate made of copper alloy so as to have a Sn-based surface layer as a surface layer and a Cu-Sn alloy layer as a lower layer, and is widely used as material for terminal.

In recent years, for example, electrification is rapidly progressed in vehicle and circuits are increased in the electrical equipment, so that connector used in the circuit is remarkably downsized and the pins thereof are increased. When the connector have a lot of pins, even though a force for inserting the connector for a pin is small, a large force is required for inserting the connector for all pins; therefore, it is apprehended that productivity is deteriorated. Accordingly, it is attempted to reduce the force for inserting for a pin by reducing a friction coefficient of tin-plated copper-alloy material.

For example, surface roughness of a substrate is predetermined in Japanese Patent No.402444, and an average of surface roughness of a Cu-Sn alloy layer is predetermined in Japanese Unexamined Patent Application, First Publication No. 2007-63624. However, it is not possible to reduce a dynamic friction coefficient.

Productivity may be deteriorated by an increase of insertion force for inserting a connector as the connector is miniaturized and the pins of the connector are increased. The insertion force F is calculated as F = 2×µ×P if contact pressure of a female terminal to a male terminal is P and a dynamic friction coefficient is µ because the male terminal is typically inserted between the female terminals vertically. It is effective to reduce P in order to reduce F. However, in order to maintain electrical connection reliability between the male and female terminals when the connectors are fitted, it is not possible to reduce the contact pressure aimlessly It is necessary to maintain the insertion force F to be about 3 N. When a number of the pins in one multi-pin connector may exceed 50, it is desirable that the insertion force of the connector is 100 N or less, or if possible, 80 N or less, or 70 N or less. Accordingly, the dynamic friction coefficient is necessitated to be 0.3 or less.

### SUMMARY OF THE INVENTION

### Problems to be Solved by the Invention

If thickness of a Sn-based surface layer is reduced so that a harder Cu-Sn alloy layer than Sn is exposed at a surface layer, a friction coefficient can be extremely reduced.

However, if the Cu-Sn alloy layer is exposed at the surface layer, a Cu-oxide is generated at the surface layer; as a result, contact resistance may be increased and soldering wettability may be deteriorated. Furthermore, it is not possible to reduce a dynamic friction coefficient to 0.3 or less even if grain size and an average of surface roughness of the Cu-Sn alloy layer are controlled.

### Means for Solving the Problem

The present invention is achieved in consideration of the above circumstances, and has an object of reducing dynamic friction coefficient to 0.3 or less with an excellent electrical-connection characteristic so as to provide tin-plated copper-alloy material for terminal with an excellent insertion/extraction performance.

If surface-exposure of a Cu-Sn alloy layer is reduced, thickness of a Sn-based surface layer is necessitated to be formed less than 0.1 µm in order to reduce dynamic friction coefficient to 0.3 or less. However, it may cause deterioration of soldering wettability and increase in contact resistance.

The inventors recognized by earnest research that, with respect to a Cu-Sn alloy layer which is formed by roughening treatment of a surface of a substrate in advance, carrying out Ni-plating, Cu-plating and Sn-plating, and then reflowing it, a dynamic friction coefficient to 0.3 or less can be realized by: setting surface roughness of the Cu-Sn alloy to 0.3µm or more and 1.0µm or less; an oil-sump depth Rvk of the Cu-Sn alloy layer to 0.5µm or more; and setting an average thickness of a Sn-based surface layer to 0.4µm or more and 1.0µm or less.

Furthermore, it is recognized that existence of Ni is important in order to obtain desired oil-sump depth Rvk. Based on these findings, following solutions are provided. In the above recognition, the inventors found following means for solving the problems.

Namely, tin-plated copper-alloy material for terminal according to the present invention is a tin-plated copper-alloy terminal material in which: a Sn-based surface layer is formed on a surface of a substrate made of Cu or Cu alloy, and a Cu-Sn alloy layer / a Ni-Sn alloy layer / a Ni or Ni alloy layer are formed in sequence from the Sn-based surface layer between the Sn-based surface layer and the substrate; the Cu-Sn alloy layer is a compound-alloy layer of (Cu, Ni)₆Sn₅ containing Cu₆Sn₅ as a main component and a part of Cu in the Cu₆Sn₅ is substituted by Ni; the Ni-Sn alloy layer is a compound-alloy layer of (Ni, Cu)₃Sn₄ containing Ni₃Sn₄ as a main component and a part of Ni is substituted by Cu; an arithmetic average roughness Ra of the Cu-Sn alloy layer is 0.3µm or more in at least one direction and arithmetic average roughness Ra in all directions is 1.0µm or less; an oil-sump depth Rvk of the Cu-Sn alloy layer is 0.5µm or more; and an average thickness of the Sn-based surface layer is 0.4µm or more and 1.0µm or less and a dynamic friction coefficient is 0.3 or less.

By increasing the arithmetic average roughness Ra of the Cu-Sn alloy layer and dissolving Ni into Cu-Sn alloy, so that the Cu-Sn alloy layer having large Rvk is formed. Therefore, a depression part of the Cu-Sn alloy layer is covered with Sn at the surface layer, so that the contact resistance and the soldering wettability are good, and the Sn-based surface layer is thinly formed by a protrusion part of the rough Cu-Sn alloy layer. As a result, the low coefficient of dynamic friction can be realized.

When the arithmetic average roughness Ra at the surface of the Cu-Sn alloy layer is measured in multiple directions as described below, if a largest value of the arithmetic average roughness Ra is less than 0.3µm, a thickness of the Sn-based surface layer is thin at the depression part, so that it is not possible to maintain electrical reliability and soldering wettability.

However, if the arithmetic average roughness Ra exceeds 1.0µm in any direction, the Sn-based surface layer is thick at the depression part, so that the friction coefficient is increased.

Furthermore, if the oil-sump depth is less than 0.5µm, it is not possible to reduce the dynamic friction coefficient to 0.3 or less.

The average thickness of the Sn-based surface layer is 0.4µm or more and 1.0µm or less because: if it is less than 0.4µm, the soldering wettability and the electrical connection reliability may be deteriorated; and if it exceeds 1.0µm, the dynamic friction coefficient may be increased because a part of the Cu-Sn alloy layer cannot be exposed at the surface layer and the surface layer is occupied only by Sn.

In the tin-plated copper-alloy material for terminal of the present invention, it is preferable that Ni is contained not less than 1 at% and not more than 25 at% in the Cu-Sn alloy layer.

The content of Ni is set 1 at% or more, because if it is less than 1 at%, a compound-alloy layer in which a part of Cu in Cu₆Sn₅ is displaced by Ni cannot be generated and the precipitous asperity cannot be formed; and the content of Ni is set 25 at% or less, because if it is more than 25 at%, the particle diameter of the (Cu, Ni)₆Sn₅ is small, the unevenness of the Cu-Sn alloy layer is too fine, and there is a case in which the dynamic friction coefficient cannot be suppressed to 0.3 or less.

### Effects of the Invention

According to the present invention, by reducing the coefficient of kinetic friction, the low contact resistance, the excellent wettability, and the excellent insertion/extraction can be obtained in the tin-plated copper-alloy material for terminal. Also, the coefficient of dynamic friction can be reduced even though the vertical load is low, so that the material according to the present invention is suitable for a small terminal.

Particularly, it is advantageous in terminals used for automobiles or electronic elements, at parts in which the low insertion force for connecting, the suitable contact resistance, and the excellent soldering wettability are necessitated.

### BRIEF DESCRIPTION OF THE DRAWINGS

FIG 1 is an SIM photomicrograph showing a surface-state of a Sn-based surface layer of copper-alloy material for terminal of Example 2.
FIG 2 is an STEM image showing a section of copper-alloy material for terminal of Example 2.
FIG 3 is an analytical graph by EDS along the white line in FIG 2.
FIG 4 is a front view schematically showing an apparatus measuring a dynamic friction coefficient of conductive members.

### DESCRIPTION OF THE PREFERRED EMBODIMENTS

An embodiment of tin-plated copper-alloy material for terminal according to the present invention will be explained.

The tin-plated copper-alloy material for terminal of the present invention is constructed as: a Sn-based surface layer is formed on a surface of a substrate made of Cu or Cu alloy; and a Cu-Sn alloy layer/a Ni-Sn alloy layer/a Ni or Ni alloy layer are formed in sequence from the Sn-based surface layer between the Sn-based surface layer and the substrate.

A composition of the substrate is not limited if it is made of Cu or Cu alloy.

The Ni or Ni alloy layer is a layer which is made of pure Ni or Ni alloy such as Ni-Co, Ni-W, and the like.

The Cu-Sn alloy layer is a compound-alloy layer of (Cu, Ni)₆Sn₅ containing Cu₆Sn₅ as a main component and a part of Cu in the Cu₆Sn₅ is substituted by N, and the Ni-Sn alloy layer is a compound-alloy layer of (Ni, Cu)₃Sn₄ containing Ni₃Sn₄ as a main component and a part of Ni is substituted by Cu. Those compound layers are made by forming a Ni plating layer, a Cu plating layer, and a Sn plating layer in sequence on the substrate and then reflowing as below, so that the Ni-Sn alloy layer and the Cu-Sn alloy layer are made in sequence on the Ni or Ni alloy layer.

In this case, the Ni content in the Cu-Sn alloy layer is not less than 1 at% and not more than 25 at%. The content of Ni is set 1 at% or more, because if it is less than 1 at%, a compound-alloy layer in which a part of Cu in Cu₆Sn₅ is displaced by Ni cannot be generated and the precipitous asperity cannot be formed; and the content of Ni is set 25 at% or less, because if it is more than 25 at%, the particle diameter of the (Cu, Ni)₆Sn₅ is small, the unevenness of the Cu-Sn alloy layer is too fine, and there is a case in which the dynamic friction coefficient cannot be suppressed to 0.3 or less.

On the other hand, the Cu content in Ni-Sn alloy layer is preferably not less than 5 at% and not more than 20 at%. The condition in which the Cu content is low means that the Ni content in Cu₆Sn₅ is also low, and the precipitous asperity cannot be made. Note that in a condition in which Cu is not displaced in Ni₃Sn₄, Ni is seldom displaced in Cu₆Sn₅. The upper limit is set because if Cu actually exceeds 20%, Cu does not enter into Ni₃Sn₄.

The boundary face between the Cu-Sn alloy layer and the Sn-based surface layer is formed unevenly, so that an arithmetic average roughness Ra of the Cu-Sn alloy layer is 0.3µm or more and 1.0µm or less, and an oil-sump depth Rvk of the Cu-Sn alloy layer is 0.5µm or more.

The arithmetic average roughness Ra is measured based on JIS (Japanese Industrial Standards) B0601. The arithmetic average roughness of the surface of Cu-Sn alloy layer is measured not only in one direction but also in plural directions including a direction parallel to a rolling direction and a direction orthogonal to the rolling direction. An arithmetic average roughness in at least one direction is 0.3µm or more and arithmetic average roughness in all directions is 1.0µm or less.

The oil-sump depth Rvk is an average depth of prominent troughs in a surface roughness curve regulated by JIS B0671-2, which is an index indicating an extent of deeper parts than average unevenness. If the value is large, it is indicated that the unevenness is steep by existence of very deep trough.

An average thickness of the Sn-based surface layer is not less than 0.4µm and not more than 1.0µm. If the thickness is less than 0.4µm, soldering wettability and electrical-connection reliability may be deteriorated; and if it exceeds 1.0µm, a surface layer cannot be composite construction of Sn and Cu-Sn and may be filled only by Sn, so that the dynamic friction coefficient is increased.

In the material for terminal having such composition, the boundary face between the Cu-Sn alloy layer and the Sn-based surface layer is formed to have steep uneven shape, so that: soft Sn exists in the steep troughs of the hard Cu-Sn alloy layer in a range of a depth from hundreds nm to the surface of the Sn-based surface layer, and a part of the hard Cu-Sn alloy layer is slightly exposed at the Sn-based surface layer at the surface; the soft Sn existing in the troughs acts as lubricant; and the dynamic friction coefficient is 0.3 or less.

Next, a method for producing the material for terminal will be explained. A plate made of Cu or Cu alloy is prepared for a substrate. The surface of the plate is roughened, by the method of chemical etching, electrolytic grinding, rolling by a roll having a roughened surface, polishing, shot blasting or the like. As a degree of the roughness, the desirable arithmetic average roughness is 0.3µm or more and 2µm or less. Thereafter, surfaces of the plate are cleaned by treatments of degreasing, pickling and the like, then Cu-plating and Sn-plating are operated in sequence.

In Ni plating, an ordinary Ni-plating bath can be used; for example, a sulfate bath containing sulfuric acid (H₂SO₄) and nickel sulfate (NiSO₄) as a major ingredients.

Temperature of the plating bath is set to not lower than 20°C and not higher than 50°C; and current density is set to 1 A/dm² to 30 A/dm². A film thickness of the Ni plating layer is set to 0.05µm or more and 1.0µm or less. If it is less than 0.05µm, the Ni content contained in (Cu, Ni)₆Sn₅ alloy is reduced, so that the Cu-Sn alloy having the precipitous asperity cannot be made; or it is more than 1.0µm, bending or the like is difficult.

In Cu plating, an ordinary Cu-plating bath can be used; for example, a copper-sulfate plating bath or the like containing copper sulfate (CuSO₄) and sulfuric acid (H₂SO₄) as major ingredients. Temperature of the plating bath is set to 20°C to 50°C; and current density is set to 1 A/dm² to 30 A/dm². A film thickness of the Cu plating layer made by the Cu plating is set to 0.05µm or more and 0.20µm or less.

If it is less than 0.05µm, the Ni content contained in (Cu, Ni)₆Sn₅ alloy is increased, the particle diameter of the (Cu, Ni)₆Sn₅ is small, so that the unevenness of the Cu-Sn alloy is too fine; or if it is more than 0.20µm, the Ni content contained in the (Cu, Ni)₆Sn₅ alloy is reduced, so that the Cu-Sn alloy having the precipitous asperity cannot be made.

As plating bath for making the Sn plating layer, an ordinary Sn-plating bath can be used; for example, a sulfate bath containing sulfuric acid (H₂SO₄) and stannous sulfate (SnSO₄) as major ingredients. Temperature of the plating bath is set to 15°C to 35°C; and current density is set to 1 A/dm² to 30 A/dm².

A film thickness of the Sn-plating layer is set to 0.8µm or more and 2.0µm or less. If the thickness of the Sn-plating layer is less than 0.8µm, the Sn-based surface layer is thin after reflowing, so that the electrical-connection characteristic is deteriorated; or if it exceeds 2.0 µm, the exposure of the Cu-Sn alloy layer at the surface is reduced, so that it is difficult to suppress the dynamic friction coefficient to 0.3 or less.

As the condition for the reflow treatment, the substrate is heated in a state in which a surface temperature is not less than 240°C and not more than 360°C for not less than 1 second and not more than 12 seconds in a reduction atmosphere, and then the substrate is rapidly cooled.

More preferably, the substrate is heated in a state in which the surface temperature is not less than 250°C and not more than 300°C for not less than 1 seconds and not more than 10 seconds, and then the substrate is rapidly cooled. In this case, a holding time tends to be short when the plating thickness is small, and to be long when the plating thickness is large.

### Examples

Corson copper alloy (Cu-Ni-Si alloy) having a plating thickness of 0.25 mm was prepared as the substrate, after polishing and roughening of the surface of the substrate, and Ni-plating, Cu-plating and Sn-plating were performed in sequence on the substrate.

In this case, plating conditions of the Ni-plating, the Cu-plating and the Sn-plating were the same in Examples and Comparative Examples as shown in Table 1. In Table 1, Dk is an abbreviation for current density for a cathode; and ASD is an abbreviation for A/dm².

**[Table 1]**

| | Ni PLATING | | Cu PLATING | | Sn PLATING | |
|---|---|---|---|---|---|---|
| COMPOSITION OF PLATING SOLUTION | NICKEL SULFATE | 250 g/L | COPPER SULFATE | 250 g/L | TIN SULFATE | 75 g/L |
| | SULFURIC ACID | 50 g/L | SULFURIC ACID | 50 g/L | SULFURIC ACID | 85 g/L |
| | | | | | ADDITIVE | 10 g/L |
| SOLUTION TEMPERATURE | 25°C | | 25°C | | 20°C | |
| Dk | 5 ASD | | 5 ASD | | 5 ASD | |

After plating at thicknesses shown in Table 2, the reflow treatment were operated to Examples and the Comparative Examples in the conditions shown in Table 2, the substrates were held in the reduction atmosphere under the conditions in which the surface temperature of the substrates were in a prescribed range, and then the substrates were cooled by water.

As Comparative Examples, the substrates vary in surface roughness, Ni-plating thickness, Cu-plating thickness and Sn-plating thickness were prepared.

The conditions of those test pieces were shown in Table 2.

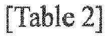

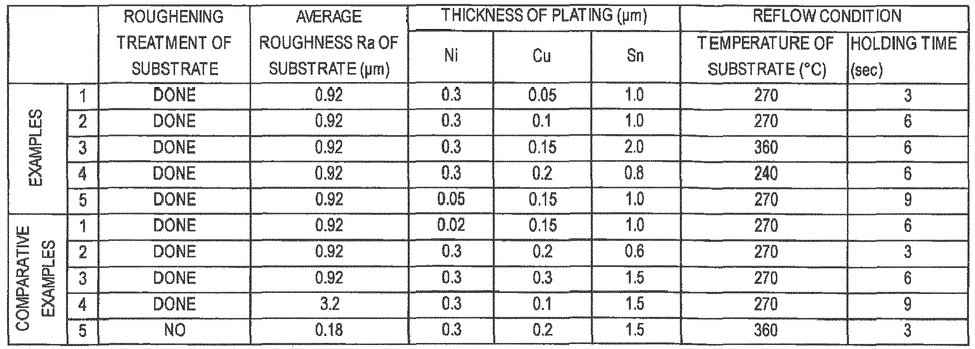

With respect to those samples, the thickness of the Sn-based surface layer after reflowing, the Ni content in (Cu, Ni)₆Sn₅ alloy, presence or absence of the (Ni, Cu)₃Sn₄ alloy layer, the arithmetic average roughness Ra of Cu-Sn alloy layer, the oil-sump depth Rvk of the Cu-Sn alloy layer were measured; and the dynamic friction coefficient, the soldering wettability, glossiness, and the electrical-connection reliability were evaluated.

The thicknesses of the Sn-based surface layer after reflowing were measured by an X-ray fluorescence coating thickness gauge (SFT9400) by SII Nanotechnology Inc. At first, all the thicknesses of the Sn-based surface layers of the samples after reflowing were measured, and then the Sn-based surface layers were removed by soaking for a few minutes in etchant for abrasion of the plate coatings made from components which do not corrode Cu-Sn alloy but etch pure Sn, for example, by L80 or the like by Laybold Co., Ltd. so that the lower Cu-Sn alloy layers were exposed. Then, the thicknesses of the Cu-Sn alloy layers in pure Sn conversion were measured. Finally, (the thicknesses of all the Sn-based surface layers minus the thickness of the Cu-Sn alloy layer in pure Sn conversion) was defined as the thickness of the Sn-based surface layer.

The Ni content in the (Cu, Ni)₆Sn₅ alloy layer and the presence or absence of the (Ni, Cu)₃Sn₄ alloy layer were detected from sectional STEM images and by EDS linear analysis. The arithmetic average roughness Ra and the oil-sump depth Rvk of the Cu-Sn alloy layer were obtained by: removing the Sn-based surface layer by soaking in etchant for abrasion of the Sn-plate coating so that the lower Cu-Sn alloy layer was exposed; and then obtaining from an average of measured value measured at 5 points in a condition of an object lens of 150 magnifications (a measuring field of 94µm×70µm) using a laser microscope (VK-9700) made by Keyence Corporation.

The average 1 of surface roughness and the oil-sump depth were measured in a right-angle direction to the direction of polishing at roughening treatment. The average roughness is the greatest value in the right-angle direction to the direction of polishing. The average 2 of surface roughness is the value measured in a direction parallel to the direction of polishing.

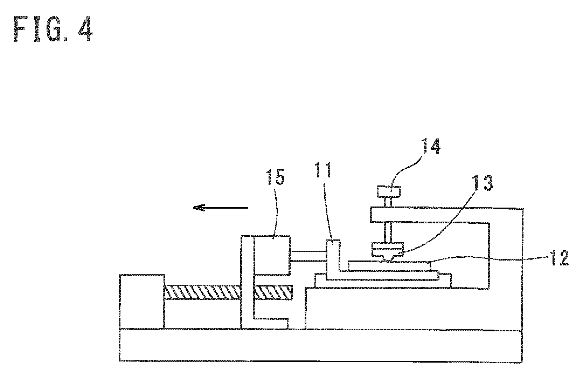

When obtaining the coefficient of dynamic friction, in order to simulate a contact portion between a male terminal and a female terminal of a engagement-type connector, a plate-like male test piece and a hemispherical female test piece having a internal diameter of 1.5 mm were prepared for each sample. Then, using a device for measuring friction (µV1000, manufactured by Trinity Lab INC.), friction force between the test pieces was measured and the coefficient of dynamic friction was obtained. It is explained with reference to FIG. 4 that: the male test piece 12 was fixed on a horizontal table 11, a half-spherical convex of the female test piece 13 was deposited on the male test piece 12 so that plated surfaces were in contact with each other, and the male test piece 12 was pressed at a load P of 100 gf or more to 500 gf or less by the female test piece 13 with a weight 14. In a state in which the load P was applied, a friction force F when the male specimen 12 was extended by 10 mm in a horizontal direction shown by an arrow at a sliding rate of 80 mm/minute was measured through a load cell 15. The coefficients of dynamic friction (= Fav/P) was obtained from the average value Fav of the friction forces F and the load P.

With respect to the soldering wettability, the test pieces were cut out to have width of 10 mm; so that zero-cross time was measured by a meniscograph method using a rosin-based active flux. (The test pieces were soaked in Sn-37%Pb solder with solder-bath temperature of 230°C; so that the soldering wettability was measured in a condition in which a soaking speed was 2 mm/sec, a soaking depth was 2 mm, and a soaking time was 10 seconds.) If the soldering zero-cross time was 3 seconds or less, it was evaluated as "good"; or it was more than 3 seconds, it was evaluated as "poor".

The glossiness was measured using a gloss meter (model number: PG-llVn made by Nippon Denshoku Industries Co., Ltd. with an entry angle of 60° in accordance with JIS Z 8741.

In order to estimate the electrical reliability, the test pieces were heated in the atmosphere, 150°C x 500 hours, and the contact resistance was measured. The measuring method was in accordance with JIS-C-5402, load variation from 0 g to 50 g - contact resistance in sliding type (1 mm) was measured using a four-terminal contact-resistance test equipment (made by Yamasaki-Seiki Co., Ltd. : CRS-113-AU), so that a contact resistance value was evaluated when the load was 50 g.

These measurement results and estimate results are shown in Table 3.

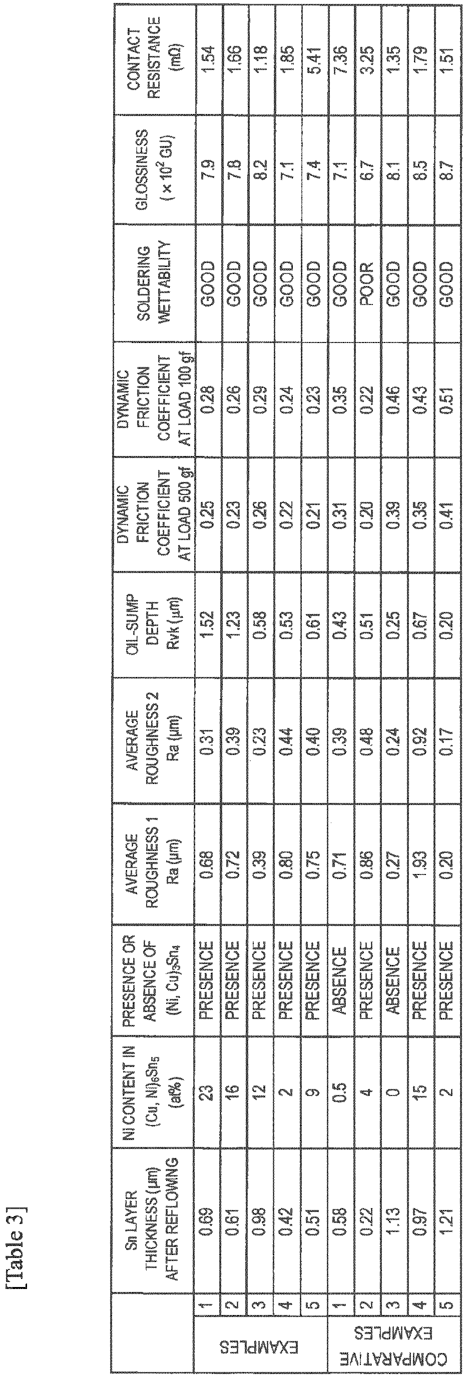

Obviously from Table 3, in every Example, the dynamic friction coefficient was small as 0.3 or less, the soldering wettability was good, the glossiness was high, the exterior appearance was good and the contact resistance was 2 nΩ or less when Ni-plating thickness was 0.3µm or more.

In contrast, the following problems were observed each comparative example.

In Comparative Example 1, the oil-sump depth Rvk of the Cu-Sn alloy layer was small, because the Ni-plating thickness was too thin, so that the dynamic friction coefficient was large. In Comparative Example 2, the soldering wettability was poor, because the Sn surface layer was too thin. In Comparative Example 3, the oil-sump depth Rvk of the Cu-Sn alloy layer was small, because the Cu-plating thickness was too thin, so that the dynamic friction coefficient was large. The friction coefficient of Comparative Example 3 was large, because the Sn-based surface layer was too thick. In Comparative Example 4, as a result of the strong roughening of the surface of the substrate, the arithmetic average roughness Ra of Cu-Sn alloy layer after reflowing was more than 1µm, the Sn-based surface layer was thick at the depression part, so that the friction coefficient was large. In Comparative Example 5, Ra and Rvk were small, because the roughening treatment of the substrate was not performed, so that the friction coefficient were large.

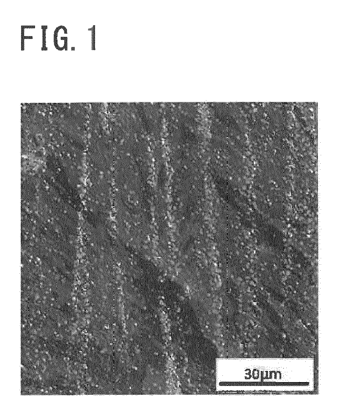

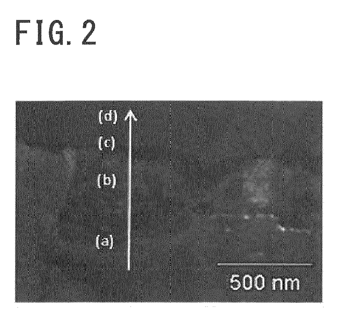

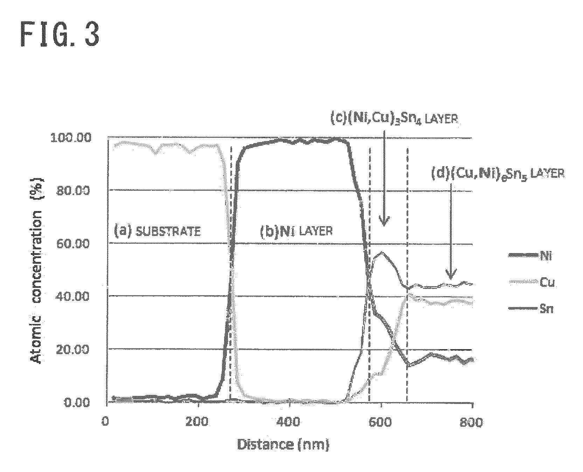

FIG 1 is an SIM photomicrograph of Example 2; FIG 2 and FIG 3 are an STEM image of a section and an EDS linear analytical result of Example 2; the substrate is denoted by (a), the Ni layer is denoted by (b), the (Ni, Cu)₃Sn₄ alloy layer is denoted by (c), and the (Cu, Ni)₆Sn₅ alloy layer is denoted by (d). As recognized by seeing those photographs, in Examples, a part of the Cu-Sn alloy layer is exposed at a surface of the Sn-based surface layer. As shown in FIG 3, it is recognized that: Ni was contained in Cu₆Sn₅; and the Ni₃Sn₄ layer containing Cu at the boundary face between the Ni layer and the Cu₆Sn₅ layer was made.

## Claims

1. A tin-plated copper-alloy terminal material comprising a Sn-based surface layer formed on a surface of a substrate made of Cu or Cu alloy, and a Cu-Sn alloy layer/a Ni-Sn alloy layer/a Ni or Ni alloy layer are formed in sequence from the Sn-based surface layer between the Sn-based surface layer and the substrate, wherein:
the Cu-Sn alloy layer is a compound-alloy layer containing Cu₆Sn₅ as a main component and a part of Cu in the Cu₆Sn₅ is displaced by Ni;
the Ni-Sn alloy layer is a compound-alloy layer containing Ni₃Sn₄ as a main component and a part of Ni in the Ni₃Sn₄ is displaced by Cu;
an arithmetic average roughness Ra of the Cu-Sn alloy layer is 0.3µm or more in at least one direction and arithmetic average roughness Ra in all directions is 1.0µm or less;
an oil-sump depth Rvk of the Cu-Sn alloy layer is 0.5µm or more;
an average thickness of the Sn-based surface layer is 0.4µm or more and 1.0µm or less; and
a dynamic friction coefficient is 0.3 or less.

2. The tin-plated copper-alloy material for terminal according to Claim 1, wherein Ni is contained not less than 1 at% and not more than 25 at% in the Cu-Sn alloy layer.
